# EUROPÄISCHE PATENTANMELDUNG

(11) **EP 4 763 403 A1**
(43) Veröffentlichungstag der Anmeldung: **24.06.2026**
(21) Anmeldenummer: 24221178.7
(22) Anmeldetag: 18.12.2024
(51) Int. Cl.: B23K 26/142, B23K 26/16, B23K 26/38

(54) **LASERSTRAHLSCHNEIDVORRICHTUNG UND VERFAHREN ZUM LASERSTRAHLSCHNEIDEN**

(71) Anmelder: Bystronic Laser AG, 3362 Niederönz (CH)
(72) Erfinder: HAAS, Titus, 4805 Brittnau (CH); SCHWIND, Tobias, 3360 Herzogenbuchsee (CH)
(74) Vertreter: Patentanwälte Geyer, Fehners & Partner mbB

(57) **Zusammenfassung**

Eine Laserstrahlschneidvorrichtung 100 für das Schneiden von metallischen Werkstücken 12 besitzt einen Schneidkopf 102 zum Richten eines Laserschneidstrahls 105 entlang einer Strahlachse 105a auf eine Prozesszone 13 eines Werkstücks 12; und eine Vorrichtung 104 zum Erzeugen eines auf die Prozesszone ausgerichteten Schalldrucks mittels Schallwellen 107. Die Vorrichtung 104 zum Erzeugen des auf die Prozesszone ausgerichteten Schalldrucks weist ein Array mehrerer Ultraschallerzeuger T auf und ist ausgebildet zum Erzeugen mindestens eines in seiner räumlichen Position bewegbaren Druckknotens des Schalldrucks mittels Einstellen wenigstens eines Parameters aus der Gruppe beinhaltend Frequenz, Phase und Signaltyp mindestens eines der Ultraschallerzeuger T. Es wird ferner ein Verfahren zum Laserstrahlschneiden angegeben.

## Beschreibung

Die Erfindung betrifft eine Laserstrahlschneidvorrichtung, insbesondere zum Schneiden von metallischen Werkstücken, ein Verfahren zum Laserstrahlschneiden, insbesondere zum Schneiden von metallischen Werkstücken und ein Computerprogrammprodukt.

In Laserstrahlschneidmaschinen wird typischerweise ein Schneidgas zum Schneiden von Teilen aus metallischen Werkstücken, z.B. Blechtafeln, Metallprofilen oder Metallrohren, genutzt. Derartige Laserstrahlschneidmaschinen weisen eine Laserleistung von wenigstens 1 kW auf. Das Schneidgas hat primär die Aufgabe, das geschmolzene Material des Werkstücks auszutreiben. Weitere Aufgaben des Schneidgases sind die Kühlung des Materials und eine Schutzgaswirkung insbesondere gegen Oxidation. Es gibt verschiedene Arten von eingesetzten Schneidgasen: Beim Sauerstoffschneiden wird Sauerstoff als reaktives Gas verwendet. Dabei werden typischerweise geringe Schnittgeschwindigkeiten und eine gute Schnittqualität, vor allem bei höheren Blechdicken erzielt. Nachteilig ist eine dabei entstehende Oxidschicht. Beim Schmelzschneiden kann reiner Stickstoff zum Austreiben der Schmelze verwendet werden. Hierbei sind, im Gegensatz zu einer Verwendung von Sauerstoff als Schneidgas, höhere Schnittgeschwindigkeiten möglich und es wird eine hinreichend gute Schnittqualität erhalten. Ferner kann als Schneidgas Druckluft anstelle von reinem Stickstoff zum Schneiden verwendet werden. Dies ist preiswerter, führt aber zu einer geringeren Schnittqualität, auch Schneidqualität genannt. Es kann ein Mischgas, z.B. ein Gemisch aus Stickstoff mit ca. 3 Vol.% Sauerstoff eingesetzt werden. Dabei werden höhere maximale Schnittgeschwindigkeiten und eine bessere Qualität, z.B. hinsichtlich Gratbildung und Rauheit erhalten.

Die DE10012792 B4 beschreibt ein Verfahren zum Schneiden von Bauteilen, bei dem durch einen lokalen Energieeintrag mit einem Laserstrahl eine schmelzflüssige Phase erzeugt wird. Dabei kann das Bauteil im Bereich der schmelzflüssigen Phase in Schwingungen dadurch versetzt werden, dass ein Schutz- oder Schneidgas mit überlagerter Schwingung auf den Bereich der schmelzflüssigen Phase gerichtet wird. M. A. Andrade, N. Perez und J. Adamowski, "Review of Progress in Acoustic Levitation," Brazilian Journal of Physics, 2017, Nr. 2, Seiten 190 bis 213, beschreiben Methoden, Objekte mit Schallwellen zu bewegen. R. Morales, I. Ezcurdia, J. Irisarri, M. A. B. Andrade und A. Marzo, "Generating Airborne Ultrasonic Amplitude Patterns Using an Open Hardware Phased Array," Applied Sciences, 26 March 2021, 11(7), 2981, beschreiben eine Erzeugung von Ultraschallamplituden-Mustern. WO2024104690 A1 beschreibt eine Prozessüberwachung mittels Mikrophon.

Nachteilig beim Laserstrahlschneiden unter Einsatz von Schneidgasen sind die Kosten, die Verfügbarkeit und die Nachhaltigkeit der Schneidgase, vor allem ein geringer Wirkungsgrad des Einsatzes der Schneidgase.

Aufgabe der Erfindung ist es, ein Verfahren und eine Vorrichtung anzugeben, die ein kostengünstiges und qualitativ hochwertiges Laserstrahlschneiden von metallischen Werkstücken ermöglichen.

Diese Aufgabe wird gelöst durch eine Laserstrahlschneidvorrichtung für das Schneiden von metallischen Werkstücken nach Anspruch 1, ein Verfahren zum Laserstrahlschneiden von metallischen Werkstücken nach Anspruch 8, sowie ein Computerprogrammprodukt nach Anspruch 15.

Eine Ausführungsform betrifft eine Laserstrahlschneidvorrichtung für das Schneiden von metallischen Werkstücken, beinhaltend einen Schneidkopf zum Richten eines Laserschneidstrahls entlang einer Strahlachse auf eine Prozesszone eines Werkstücks; und eine Vorrichtung zum Erzeugen eines auf die Prozesszone ausgerichteten Schalldrucks mittels Schallwellen; wobei die Vorrichtung zum Erzeugen des auf die Prozesszone ausgerichteten Schalldrucks ein Array mehrerer Ultraschallerzeuger aufweist und ausgebildet ist zum Erzeugen mindestens eines in seiner räumlichen Position bewegbaren Druckknotens des Schalldrucks mittels Einstellen wenigstens eines Parameters aus der Gruppe beinhaltend Frequenz, Phase und Signaltyp mindestens eines der Ultraschallerzeuger. Die Vorrichtung zum Erzeugen des auf die Prozesszone ausgerichteten Schalldrucks kann ausgebildet sein, die Schallwellen im gasförmigen Medium zu erzeugen. Der Schalldruck kann ein Luftschalldruck oder ein Gasschalldruck sein.

Die Frequenz kann im Bereich von 5 kHz bis 100 MHz, bevorzugt 20 kHz bis 30 MHz, liegen. Die Phase kann beispielsweise im Bereich von 0° bis 180° liegen. Der Signaltyp kann ausgewählt sein aus Sinuswellen, Rechteckwellen, Dreieckwellen, Sägezahlwellen, modulierten Wellen, insbesondere mit Amplitudenmodulation oder Frequenzmodulation, oder einer beliebigen Kombination davon.

Die Laserstrahlschneidvorrichtung ermöglicht, dass beim Laserstrahlschneiden kein oder deutlich weniger Schneidgas verwendet werden muss. Geschmolzenes Material des Werkstücks kann mit dem mindestens einen Druckknoten des Schalldrucks aus der Prozesszone entfernt werden. Erfolgt das Laserstrahlschneiden ohne Einsatz von z.B. Sauerstoff als Schneidgas, sind somit apparative Einrichtungen für das Zuführen von Schneidgas, wie Regler und Leitungen für das Schneidgas nicht erforderlich. Erfolgt das Laserstrahlschneiden basierend z.B. auf Sauerstoff, sind Niederdruckleitungen und Niederdruckregler, z.B. für Drücke unter 1 bar, ausreichend. Diese Vorteile ermöglichen wiederum einen einfachen Aufbau eines Schneidkopfs für das Laserstrahlschneiden. Ferner sind weniger Verschleißteile, wie z.B. ein Sortiment von Düsen für den Schneidkopf, erforderlich. Es wird ein kostengünstiges und qualitativ hochwertiges Laserstrahlschneiden von metallischen Werkstücken ermöglicht. Insbesondere kann das Laserstrahlschneiden ohne Schneidgas oder mit einem geringen Verbrauch von Schneidgas durchgeführt werden. Zudem kann in einigen Ausführungsformen der Einsatz von Schneidgas unter Hochdruck vermieden werden. Ferner ermöglicht die Laserstrahlschneidvorrichtung eine hohe Schneidqualität, so dass eine Nachbearbeitung der geschnittenen metallischen Werkstücke vermieden werden kann oder nur in geringem Umfang erforderlich ist.

Das Array kann als eine räumliche Anordnung, z.B. eine zwei- oder dreidimensionale Anordnung, der Ultraschallerzeuger verstanden werden. Die Prozesszone kann als Schneidzone verstanden werden. Der Signaltyp kann beispielsweise ein sinus-förmiges und/oder rechteckiges Signal sein.

Da die Vorrichtung zum Erzeugen des auf die Prozesszone ausgerichteten Schalldrucks mehrere Ultraschallerzeuger aufweist, können die Schallwellen der Ultraschallerzeuger überlagert werden. Mittels der Überlagerung der Schallwellen der Ultraschallerzeuger kann ein gewünschter Schalldruck, insbesondere ein hoher Schalldruck, erzeugt werden. Durch die Überlagerung der Schallwellen aus dem Array der Ultraschallerzeuger, wie z.B. Ultraschall-Lautsprecher, ist es möglich, die räumliche Position eines oder mehrerer akustischer Druckknoten (acoustic pressure node) zeitabhängig zu beeinflussen. Mittels der zeitlichen Änderung der Druckknotenposition(en) im Raum kann das geschmolzene Material des Werkstücks bewegt werden.

Mit Hilfe der von den Ultraschallerzeugern erzeugten Schallwellen kann somit das geschmolzene Material des Werkstücks beim Laserschneiden ausgetrieben werden. Dies kann ohne Schneidgas oder in Kombination mit einem Schneidgas erfolgen. Dabei kann als das Schneidgas beispielsweise Stickstoff alleine, ein Mischgas, z.B. ein Gemisch aus Stickstoff mit ca. 3 Vol.% Sauerstoff, Sauerstoff alleine oder Druckluft alleine eingesetzt werden. Bei Verwendung von Schallwellen während eines Laserschneidens, das mit Stickstoff oder Druckluft als Schneidgas durchgeführt wird, kann die Menge des Schneidgases reduziert werden oder es kann gänzlich auf das Schneidgas verzichtet werden, da Stickstoff und Druckluft nicht wegen des reaktiven Charakters des Gases eingesetzt werden. Ein reaktives Mischgas oder Sauerstoff können dann eingesetzt werden, wenn das Blech des Werkstücks eine hohe Dicke besitzt und/oder wenn ein im Wesentlichen gratfreies Schnittresultat erwünscht ist. Die mit den Ultraschallerzeugern einstellbaren oder eingestellten Positionen der Druckknoten der Schallwellen können abhängig sein von durchströmten gasförmigen Medium.

Abhängig vom eingesetzten gasförmigen Medium, d.h. Luft, einem Schneidgas und/oder einem Hilfsgas, können daher die Positionen der Druckknoten variieren. Das Hilfsgas kann ein Schneidgas beinhalten oder sein.

Durch die einstellbare Position der Druckknoten und/oder die einstellbare Stärke der Schallwellen kann außerdem die Dynamik, z.B. die Beweglichkeit und der Aggregatzustand, des Schmelzbades gezielt beeinflusst werden, z.B. gestört, reduziert oder verstärkt werden. Beispielsweise kann eine hohe Dynamik des Schmelzbades, bei der Spritzer und/oder Wellen der Schmelze erzeugt werden, gedämpft werden. Zudem kann aufgrund der Kombination von Schallwellen und Schneidgas die Schneidqualität positiv beeinflusst werden. Mit einer Prozessüberwachung, z:B. unter Verwendung eines Mikrophons, einer Kamera und/oder einer Optischen Kohärenztomographie (OCT), kann die Schmelzbaddynamik erfasst und mittels Schallwellen gezielt beeinflusst werden.

Die Anzahl der erzeugbaren Druckknoten und/oder ein Bereich der einstellbaren räumlichen Position des/der Druckknoten können durch die Anzahl, Anordnung und/oder Ausrichtung der Ultraschallerzeuger vorbestimmt und/oder eingestellt werden. Die Anzahl der Druckknoten und/oder die räumliche Position des/der Druckknoten können ferner mittels der Frequenz, der Phase und/oder dem Signaltyp mindestens eines der Ultraschallerzeuger eingestellt werden.

Das metallische Werkstück kann beispielsweise ein Blech, ein Rohr oder ein Profil sein. Der Begriff "Laserstrahlschneiden" kann im Folgenden synonym als Laserschneiden oder Schneiden bezeichnet werden. Gleiches gilt für Wortkombination und grammatikalische Abwandlungen dieses Begriffs.

Die Vorrichtung zum Erzeugen des auf die Prozesszone ausgerichteten Schalldrucks kann ausgebildet sein, beim Erzeugen des mindestens einen in seiner räumlichen Position bewegbaren Druckknotens im Bereich der Prozesszone mindestens eine konstruktive Interferenz der Schallwellen einzustellen, die eine auf geschmolzenes Material des Werkstücks gerichtete Austriebskraft zum Austreiben des geschmolzenen Materials aus der Prozesszone erzeugt. Durch Einstellung einer konstruktiven Interferenz kann somit eine gezielte Kraft auf das im Schneidbereich der Prozesszone geschmolzene Material des Werkstücks aufgebracht werden, die das geschmolzene Material vom Werkstück entfernt.

Die Vorrichtung zum Erzeugen eines auf die Prozesszone ausgerichteten Schalldrucks kann ausgebildet sein, die Position des mindestens einen bewegbaren Druckknotens und/oder eine Position der mindestens einen konstruktiven Interferenz zu oszillieren und/oder schneidrichtungsabhängig vorzugeben. Auf diese Weise kann der Druckknoten exakt und/oder flexibel auf den Zielbereich, d.h. die Prozesszone, ausgerichtet werden.

Die Ultraschallerzeuger des Arrays können mindestens eine Arrayfläche aufspannen, die zumindest teilweise um die Strahlachse herum angeordnet, eben und/oder gewölbt ist. Beispielsweise kann das Array mindestens eine ebene Fläche oder eine teilkugelförmige Anordnung bilden. Zumindest einer der Ultraschallerzeuger des Arrays kann derart angeordnet sein, dass eine Mittenachse eines von dem Ultraschallerzeuger ausgehenden Winkelbereichs der von ihm erzeugten Schallwelle parallel zu oder in einem Winkel zur Strahlachse ausgerichtet ist. Mindestens einer der Ultraschallerzeuger kann eine Verstelleinrichtung aufweisen, die ausgebildet ist, die Ausrichtung der Mittenachse der von dem jeweiligen Ultraschallerzeuger erzeugten Schallwelle statisch und/oder dynamisch zu verstellen. Mindestens einer der Ultraschallerzeuger und/oder mindestens eine der Verstelleinrichtungen können ansteuerbar ausgebildet sein. Dadurch kann die räumliche Position mindestens eines der Druckknoten schnell geändert werden. Die Mittenachsen mehrerer Ultraschallerzeuger können gleich oder unterschiedlich ausgerichtet sein/werden.

Es kann eine Steuereinheit zum Steuern des Arrays der Ultraschallerzeuger vorgesehen sein, wobei die Steuereinheit ausgebildet ist, mindestens einen der Ultraschallerzeuger des Arrays jeweils einzeln und/oder mehrere der Ultraschallerzeuger in mindestens einer definierten Gruppe anzusteuern. Damit kann die Stärke und Ausrichtung der Schallwelle variiert werden. Die Verstelleinrichtungen können ferner derart ansteuerbar ausgebildet sein, dass die Ausrichtungen der Ultraschallerzeuger jeweils einzeln und/oder koordiniert verstellt werden.

Die Laserstrahlschneidvorrichtung kann eine Vorrichtung zur Kalibrierung der räumlichen Position des bewegbaren Druckknotens des Schalldrucks aufweisen, die mindestens ein Element ausgewählt aus einem Kraftsensor, einem Ultraschallmikrophon und einer optischen Messeinrichtung, z.B. OCT, aufweist. Ferner kann eine Vorrichtung zur Prozessüberwachung der räumlichen Position des bewegbaren Druckknotens des Schalldrucks vorgesehen sein, die mindestens ein Element ausgewählt aus einem Kraftsensor, einem Ultraschallmikrophon und einer optischen Messeinrichtung, z.B. OCT, aufweist. Die Vorrichtung zur Prozessüberwachung kann die Vorrichtung zur Kalibrierung beinhalten, oder umgekehrt kann die Vorrichtung zur Kalibrierung die Vorrichtung zur Prozessüberwachung beinhalten. Mit der Kalibrierung können Sollwerte für die Position des Druckknotens vorgegeben werden. Abweichungen von den Sollwerten können mit der Prozessüberwachung steuerungstechnisch kompensiert werden. Es kann außerdem mindestens ein Resonator zur Verstärkung oder Abschwächung von Schallwellen vorgesehen sein. Als Resonator können beispielsweise ein oder mehrere Hohlräume vorgesehen sein.

In der Laserstrahlschneidvorrichtung kann eine Vorrichtung zum Einbringen eines Hilfsgases in die Prozesszone und zum zusätzlichen Austreiben von geschmolzenem Material des Werkstücks aus der Prozesszone mittels des Hilfsgases vorgesehen sein. Das Hilfsgas kann ausgewählt sein aus wenigstens einem inerten Gas, wenigsten einem Reaktivgas, Druckluft und einer Kombination davon. Das Inertgas kann ausgewählt sein aus Stickstoff, Edelgas, Druckluft und einer beliebigen Kombination davon. Das Reaktivgas kann ausgewählt sein aus Sauerstoff und einem reaktiven Mischgas, z.B. Stickstoff mit ca. 3 Vol.% Sauerstoff. Das Hilfsgas kann ein Schneidgas beinhalten oder sein.

Eine weitere Ausführungsform betrifft ein Verfahren zum Laserstrahlschneiden von metallischen Werkstücken, insbesondere mit einer Vorrichtung nach der vorstehenden Ausführungsform und Abwandlungen davon, beinhaltend Richten eines Laserschneidstrahls entlang einer Strahlachse auf eine Prozesszone eines Werkstücks; und Erzeugen eines auf die Prozesszone ausgerichteten Schalldrucks mittels Schallwellen; wobei ein Array mehrerer Ultraschallerzeuger mindestens einen in seiner räumlichen Position bewegbaren Druckknoten des Schalldrucks erzeugt, und wobei wenigstens ein Parameter aus der Gruppe beinhaltend Frequenz, Phase und Signaltyp mindestens eines der Ultraschallerzeuger eingestellt wird. Der Signaltyp kann beispielsweise ein sinus-förmiges und/oder rechteckiges Signal sein. Der auf die Prozesszone ausgerichtete Schalldruck kann im gasförmigen Medium erzeugt werden. Der Schalldruck kann ein Luftschalldruck oder ein Gasschalldruck sein.

Die Frequenz kann im Bereich von 5 kHz bis 100 MHz, bevorzugt 20 kHz bis 30 MHz, liegen. Die Phase kann beispielsweise im Bereich von 0° bis 180° liegen. Der Signaltyp kann ausgewählt sein aus Sinuswellen, Rechteckwellen, Dreieckwellen, Sägezahlwellen, modulierten Wellen, insbesondere mit Amplitudenmodulation oder Frequenzmodulation, oder einer beliebigen Kombination davon.

Beim Erzeugen des mindestens einen in seiner räumlichen Position bewegbaren Druckknotens kann im Bereich der Prozesszone mindestens eine konstruktive Interferenz der Schallwellen eingestellt werden, die eine auf geschmolzenes Material des Werkstücks gerichtete Austriebskraft zum Austreiben des geschmolzenen Materials aus der Prozesszone erzeugt.

Die Position des mindestens einen bewegbaren Druckknotens und/oder eine Position der mindestens einen konstruktiven Interferenz können oszilliert werden und/oder schneidrichtungs-abhängig vorgegeben werden.

Das Array der Ultraschallerzeuger kann mindestens eine modulierte oder modulierbare Schallwelle erzeugen. Die Position des bewegbaren Druckknotens kann durch Einstellen mindestens eines Parameters aus der Gruppe beinhaltend eine Frequenz und eine Phasenlage der mindestens einen Schallwelle bewegt werden.

Es kann eine Kalibrierung der räumlichen Position des bewegbaren Druckknotens des Schalldrucks mit mindestens einem Element ausgewählt aus einem Kraftsensor, einem Ultraschallmikrophon und einer optischen Messeinrichtung erfolgen. Ferner kann eine Prozessüberwachung mit mindestens einem Element ausgewählt aus einem Kraftsensor, einem Ultraschallmikrophon und einer optischen Messeinrichtung erfolgen. Zudem kann eine Verstärkung oder Abschwächung von Schallwellen mit mindestens einem Resonator erfolgen.

Es kann ein Hilfsgas in die Prozesszone eingebracht und geschmolzenes Material des Werkstücks kann zusätzlich mittels des Hilfsgases aus der Prozesszone ausgetrieben werden. Das Hilfsgas kann ausgewählt sein oder werden aus wenigstens einem inerten Gas, wenigsten einem Reaktivgas, Druckluft und einer Kombination davon. Das Hilfsgas kann ein Schneidgas beinhalten oder sein. Die Schallwellen können über gasförmiges Medium in die Prozesszone des Werkstücks eingeleitet werden.

Eine weitere Ausführungsform betrifft ein Computerprogrammprodukt, beinhaltend ein oder mehrere Programmmodule, die bewirken, dass die Laserstrahlschneidvorrichtung nach der vorstehenden Ausführungsform oder Abwandlungen davon Schritte des Verfahrens nach der vorstehenden Ausführungsform oder Abwandlungen davon ausführt, insbesondere wenn die Programmmodule in eine Speichereinheit oder eine Recheneinheit der Laserstrahlschneidvorrichtung geladen werden.

Mit der vorstehenden Ausführungsform oder Abwandlungen des Verfahrens zum Laserstrahlschneiden von metallischen Werkstücken können die gleichen Vorteile und Funktionen realisiert werden, wie mit der Ausführungsform oder Abwandlungen der Laserstrahlschneidvorrichtung für das Schneiden von metallischen Werkstücken, insbesondere mit gleichlautenden und/oder analogen Merkmalen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch ein Beispiel einer Laserstrahlschneidvorrichtung 100 für das Schneiden eines metallischen Werkstücks;
- Fig. 2: schematisch ein anderes Beispiel der Laserstrahlschneidvorrichtung 100;
- Fig. 3: schematisch ein weiteres Beispiel der Laserstrahlschneidvorrichtung 100;
- Fig. 4: schematisch ein Beispiel der Laserstrahlschneidvorrichtung 100;
- Fig. 5: schematisch ein Beispiel der Laserstrahlschneidvorrichtung 100;
- Fig. 6: schematisch ein Beispiel der Laserstrahlschneidvorrichtung 100; und
- Fig. 7: schematisch ein beispielhaftes Verfahren zum Laserstrahlschneiden.

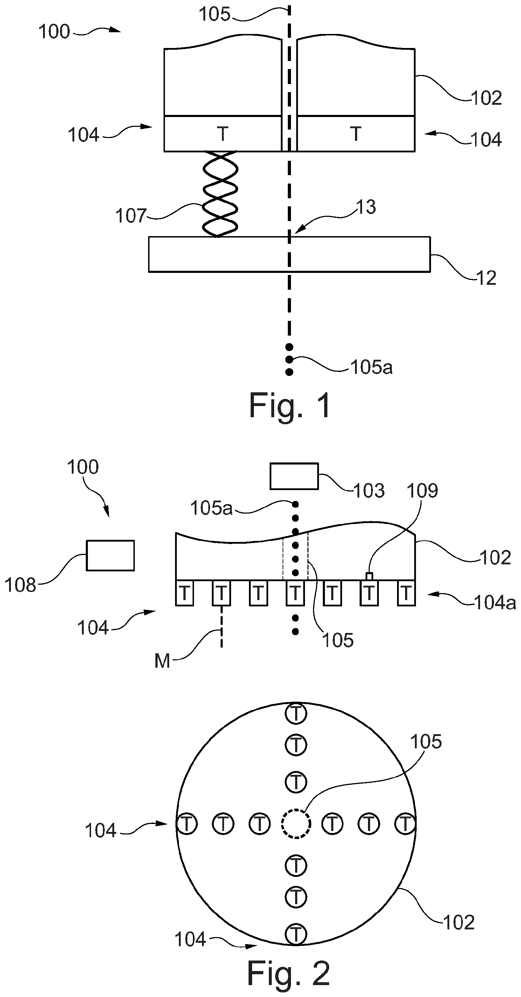

Fig. 1 stellt schematisch eine beispielhafte Laserstrahlschneidvorrichtung 100 für das Schneiden eines metallischen Werkstücks 12 in einer seitlichen Ansicht dar. Das Werkstück 12 ist im vorliegenden Beispiel ein Blech. Die Vorrichtung 100 beinhaltet einen Schneidkopf 102 zum Richten eines Laserschneidstrahls 105 (gestrichelt dargestellt) entlang einer Strahlachse 105a (gepunktet dargestellt) auf eine Prozesszone 13 des Werkstücks 12. In den Figuren ist jeweils nur das dem Werkstück zugewandte Ende des Schneidkopfs 102, auch unteres Ende des Schneidkopfs 102 genannt, als Teilansicht der Laserstrahlschneidvorrichtung 100 dargestellt. Der Schneidkopf 102 besitzt eine Vorrichtung 104 zum Erzeugen eines auf die Prozesszone 13 ausgerichteten Schalldrucks mittels Schallwellen 107. Die Vorrichtung 104 zum Erzeugen des auf die Prozesszone ausgerichteten Schalldrucks weist ein Array mehrerer Ultraschallerzeuger T auf. Die Nominalfrequenz eines oder mehrerer der Ultraschallerzeuger T kann im Bereich von 1 kHz bis 300 MHz liegen. Die Leistung eines oder mehrerer der Ultraschallerzeuger T kann im Bereich von 10 bis 200 W liegen. Im vorliegenden Beispiel wurden als Ultraschallerzeuger S7394 Shear Wave EMAT Ultrasonic Transducer der Firma ACS Group mit 3 MHz Maximalleistung genutzt. Im vorliegenden Beispiel ist die Vorrichtung 104 mit den Ultraschallerzeugern am dem Werkstück zugewandten Ende des Schneidkopfs 102 vorgesehen. Die Vorrichtung 104 ist ausgebildet zum Erzeugen mindestens eines in seiner räumlichen Position bewegbaren Druckknotens des Schalldrucks mittels Einstellen wenigstens eines Parameters aus der Gruppe beinhaltend Frequenz, Phase und Signaltyp mindestens eines der Ultraschallerzeuger T. Eine beispielhaft in Fig. 2 schematisch gezeigte Laserquelle 103 zum Erzeugen des Laserschneidstrahls 105 der Laserstrahlschneidvorrichtung 100 kann in allen Beispielen an dem Schneidkopf 102 angekoppelt sein. Die Laserquelle kann einen Laserschneidstrahl mit einer Laserleistung von wenigstens 1 kW, bevorzugt 2 bis 80 kW, mehr bevorzugt 5 bis 40 kW, erzeugen. Im vorliegenden Beispiel ist der Schalldruck ein Luftschalldruck.

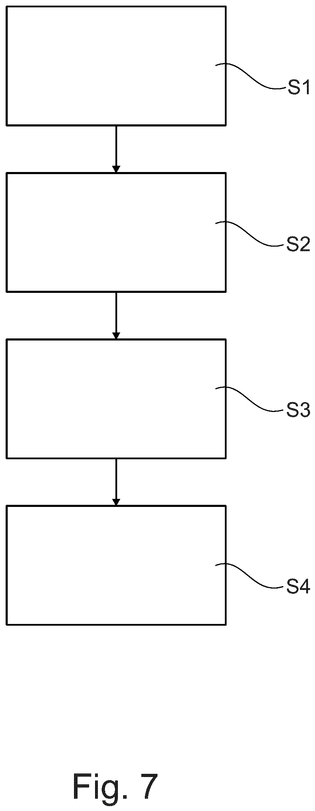

Im Betrieb der Laserstrahlschneidvorrichtung 100, der schematisch in Fig. 7 dargestellt ist, wird der Laserschneidstrahl 105, auch Laserstrahl 105 genannt, in einem Schritt S1 entlang der Strahlachse 105 auf die Prozesszone 13 des Werkstücks gerichtet. Das Werkstück 12 wird dabei geschnitten. In einem Schritt S2 wird ein auf die Prozesszone 13 ausgerichteter Schalldruck mittels der Schallwellen 107 erzeugt. Der Schalldruckpegel kann beispielsweise 100 bis 160 dB betragen. Im vorliegenden Beispiel werden die Schallwellen über gasförmiges Medium, d.h. Luft, in die Prozesszone 13 des Werkstücks 12 eingeleitet. Das Array der Ultraschallerzeuger T erzeugt in einem Schritt S3 mindestens einen in seiner räumlichen Position bewegbaren Druckknoten des Schalldrucks, wobei in einem Schritt S4 wenigstens ein Parameter aus der Gruppe beinhaltend Frequenz, Phase und Signaltyp mindestens eines der Ultraschallerzeuger eingestellt wird. Die Frequenz kann beispielsweise im Bereich von 5 kHz bis 100 MHz, bevorzugt 20 kHz bis 30 MHz, eingestellt werden. Die Phase kann beispielsweise im Bereich von 0° bis 180° eingestellt werden. Der Signaltyp kann ausgewählt werden aus Sinuswellen, Rechteckwellen, Dreieckwellen, Sägezahlwellen, modulierten Wellen, insbesondere mit Amplitudenmodulation oder Frequenzmodulation, oder einer beliebigen Kombination davon. Durch Einstellen und/oder Variieren mindestens eines dieser Parameter kann die Position des Druckknotens derart gewählt und/oder verändert werden, dass in der Prozesszone 13 vorhandenes, durch den Laserschneidstrahl 105 geschmolzenes Material des Werkstücks 12 durch eine Austriebskraft aus der Prozesszone getrieben wird. Auf diese Weise kann das geschmolzene Material während des Schneidens ohne den Gasdruck eines Schneidgases aus der Prozesszone entfernt werden.

Die Vorrichtung 104 zum Erzeugen des auf die Prozesszone ausgerichteten Schalldrucks ist beispielweise ausgebildet, beim Erzeugen des mindestens einen in seiner räumlichen Position bewegbaren Druckknotens im Bereich der Prozesszone 13 mindestens eine konstruktive Interferenz der Schallwellen 107 einzustellen, die eine auf geschmolzenes Material 14 des Werkstücks 12 gerichtete Austriebskraft zum Austreiben des geschmolzenen Materials aus der Prozesszone erzeugt. So kann beim Erzeugen des mindestens einen in seiner räumlichen Position bewegbaren Druckknotens im Bereich der Prozesszone 13 mindestens eine konstruktive Interferenz der Schallwellen 107 eingestellt werden, die eine auf geschmolzenes Material des Werkstücks gerichtete Austriebskraft zum Austreiben des geschmolzenen Materials aus der Prozesszone erzeugt. Dabei kann die Position des mindestens einen bewegbaren Druckknotens und/oder eine Position der mindestens einen konstruktiven Interferenz oszilliert werden und/oder schneidrichtungsabhängig vorgegeben werden. Auf diese Weise kann die Austriebskraft verstärkt und zielgerichtet erzeugt werden.

Das Oszillieren der Position des mindestens einen bewegbaren Druckknotens und/oder der Position der mindestens einen konstruktiven Interferenz kann durch Variieren der Frequenz und/oder Phase der Schallwellen 107, durch schnelles Andern des Signaltyps und/oder durch Aktivieren und/oder Deaktivieren der einzelnen Ultraschallerzeuger T bewirkt werden.

In Fig. 2 ist schematisch ein Beispiel der Laserstrahlschneidvorrichtung 100 gezeigt, wobei in der oberen Darstellung eine seitliche Darstellung des Schneidkopfs 102 und in der unteren Darstellung eine Ansicht des Schneidkopfs 102 von unten, d.h. gesehen von dem dem Werkstück zugewandten Ende des Schneidkopfs, wiedergegeben ist. Die Ultraschallerzeuger T des Arrays spannen eine Arrayfläche 104a auf, die um die Strahlachse 105a herum angeordnet und eben ist. Die Ultraschallerzeuger T des Arrays sind derart angeordnet, dass eine Mittenachse M eines von dem jeweiligen Ultraschallerzeuger T ausgehenden Winkelbereichs der von ihm erzeugten Schallwelle parallel zur Strahlachse 105a ausgerichtet ist.

Die Ultraschallerzeuger T sind im vorliegenden Beispiel am unteren Ende des Schneidkopfs 102 in gleichmäßigen Abständen voneinander in Form eines Kreuzes vorgesehen, das die ebene Arrayfläche 104a aufspannt. Die ebene Arrayfläche 104a ist zur Strahlachse 105a in einem 90°-Winkel angeordnet. Der Laserstrahl 105 verläuft mittig durch die Arrayfläche 104a.

In einigen Beispielen der Laserstrahlschneidvorrichtung 100 weist mindestens einer der Ultraschallerzeuger eine Verstelleinrichtung 109 auf, die ausgebildet ist, die Ausrichtung der Mittenachse M der von dem jeweiligen Ultraschallerzeuger erzeugten Schallwelle 107 statisch und/oder dynamisch zu verstellen. Die Verstelleinrichtung 109 ist beispielhaft in Fig. 2 dargestellt. Die Verstelleinrichtung 109 weist beispielsweise eine winkelverstellbare Halterung, die den Ultraschallerzeuger trägt, und einen Aktuator zum Einstellen eines Winkels der Mittenachse M relativ zur Strahlachse 105a auf. Mindesten einer der Ultraschallerzeuger T und/oder mindestens eine der Verstelleinrichtungen 109 können ansteuerbar ausgebildet sein.

Eine beispielhaft in Fig. 2 gezeigte Steuereinheit 108 der Laserstrahlschneidvorrichtung 100, z.B. eine zentrale Steuereinheit der Vorrichtung 100, kann in allen Beispielen zum Steuern des Arrays der Ultraschallerzeuger T ausgebildet und mit diesen datenleitend verbunden sein. Dadurch kann mindestens einer der Ultraschallerzeuger T des Arrays jeweils einzeln und/oder mehrere der Ultraschallerzeuger T in mindestens einer definierten Gruppe angesteuert werden. Auf diese Weise kann die Stärke und Ausrichtung der Schallwellen und die Position des oder der Druckknoten(s) variiert werden. Die Verstelleinrichtungen der Ultraschallerzeuger T können ferner derart ansteuerbar ausgebildet sein, dass die Ausrichtungen der Ultraschallerzeuger T jeweils einzeln und/oder koordiniert verstellt werden können. Die Steuereinheit 108 kann eine Speichereinheit und/oder eine Recheneinheit beinhalten.

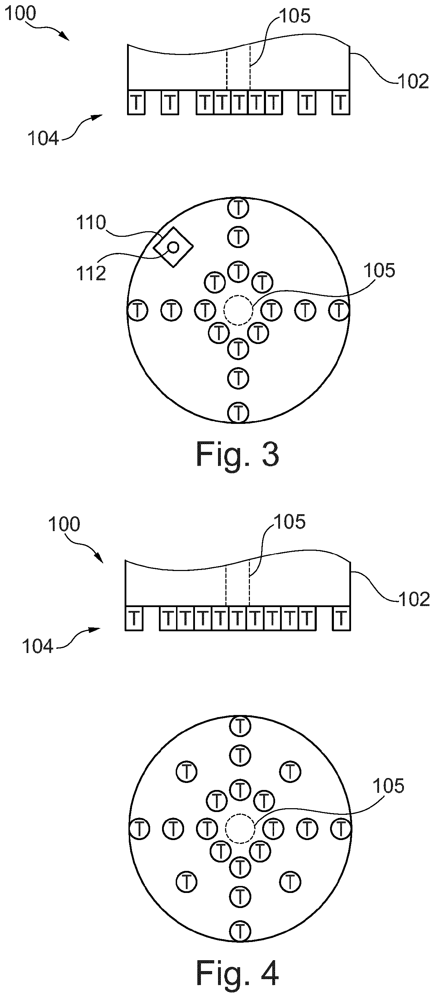

Fig. 3 zeigt schematisch ein Beispiel, in dem die Ultraschallerzeuger T gleiche oder unterschiedliche Abstände zueinander besitzen und kombiniert kreuzförmig und in einer Raute um den Laserstrahl 105 herum angeordnet sind. In der oberen Darstellung der Fig. 3 ist eine seitliche Darstellung des Schneidkopfs 102 und in der unteren Darstellung eine Ansicht des Schneidkopfs 102 von unten wiedergegeben. In diesem Beispiel weist die Laserstrahlschneidvorrichtung 100 eine Vorrichtung 110 zur Messung des Ultraschalldrucks auf. Die Vorrichtung 110 ist in diesem Beispiel ebenfalls am unteren Ende des Schneidkopfs 102 vorgesehen und besitzt mindestens eine Schallmesseinrichtung 112, mit der der Ultraschall gemessen werden kann. Im vorliegenden Beispiel ist zum Messen der Schalldrucks ein piezoelektrischer Kraftaufnehmer 9215A der Firma Kistler vorgesehen. Alternativ oder zusätzlich ist zum Messen des Schallpegels ein Ultraschallmikrophon FG black von Batlogger, 10 bis 150 kHz, vorgesehen. Die Vorrichtung 110 zur Messung des Ultraschalldrucks ist datenleitend mit der Steuereinheit 108 verbunden. Die Vorrichtung 110 kann zur Prozessbeobachtung und/oder zum Regeln des Ultraschalldrucks mittels Einstellen wenigstens eines Parameters aus der Gruppe beinhaltend Frequenz, Phase und Signaltyp mindestens eines der Ultraschallerzeuger T eingesetzt werden.

Die Vorrichtung 110 zur Messung des Ultraschalldrucks ist in weiteren Beispielen zur Kalibrierung der räumlichen Position des bewegbaren Druckknotens des Schalldrucks ausgebildet. In einigen Beispielen ist die Vorrichtung 110 zur Messung des Ultraschalldrucks für eine Prozessüberwachung der räumlichen Position des bewegbaren Druckknotens des Schalldrucks ausgebildet. Mit der Kalibrierung können Sollwerte für eine Regelung zur Einstellung der Position des Druckknotens vorgegeben werden. Abweichungen von den Sollwerten können mit der Prozessüberwachung steuerungstechnisch kompensiert werden. Alternativ oder zusätzlich zu der Schallmesseinrichtung 112 kann eine optische Messeinrichtung, wie eine Kamera, zur Prozessbeobachtung und/oder Kalibrierung vorgesehen sein. Mit einer zur Strahlachse 105a koaxial vorgesehenen und aufnehmenden Kamera kann beispielsweise die Schmelzbaddynamik gemessen werden. Mit einer zusätzlich seitlich angebrachten Kamera kann beispielsweise die Position des Druckknotens mit Hilfe von Rauch oder die Eindringtiefe in ein flüssiges Medium, z.B. vorliegend die Schmelze des Werkstückmaterials, gemessen und für die Kalibrierung verwendet werden. Der Schneidkopf 102 kann außerdem mindestens einen Resonator (nicht gezeigt) zur Verstärkung oder Abschwächung von Schallwellen aufweisen. Als Resonator können beispielsweise ein oder mehrere Hohlräume vorgesehen sein.

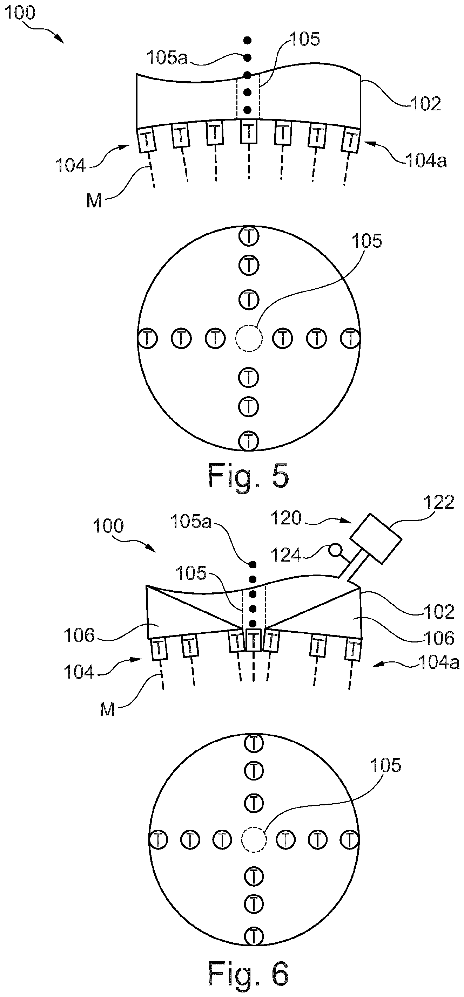

Fig. 4 bis 6 zeigen schematisch weitere beispielhafte Anordnungen der Ultraschallerzeuger T des Arrays, ebenfalls in der jeweiligen oberen Darstellung mit einer seitlichen Darstellung des Schneidkopfs 102 und in der jeweiligen unteren Darstellung mit einer Ansicht des Schneidkopfs 102 von unten. Die Anordnung der Ultraschallerzeuger in Fig. 4 unterscheidet sich von derjenigen der Fig. 3 darin, dass vier zusätzliche Ultraschallerzeuger T symmetrisch eingefügt sind. In dem in Fig. 5 dargestellten Array spannen die Ultraschallerzeuger T eine gewölbte Arrayfläche 104a auf, in der die Mittenachsen M der Ultraschallerzeuger T jeweils in einem Winkel zur Strahlachse 105a ausgerichtet sind, wobei sich die Winkel unmittelbar benachbarter Ultraschallerzeuger unterscheiden. Fig. 6 stellt eine Anordnung der Ultraschallerzeuger T dar, die unterschiedliche ebene Teilflächen der Arrayfläche 104a aufspannen. Die Ultraschallerzeuger T derselben Fläche sind dabei im gleichen Winkel zur Strahlachse 105a ausgerichtet. Die Ultraschallerzeuger T unterschiedlicher Flächen besitzen unterschiedliche Ausrichtungswinkel zur Strahlachse 105a.

Das Beispiel der in Fig. 6 dargestellten Vorrichtung 100 weist eine Vorrichtung 120 zum Einbringen eines Hilfsgases in die Prozesszone 13 auf. Die Vorrichtung 120 besitzt ein Reservoir 122 für ein Hilfsgas. Das Hilfsgas ist beispielsweise ausgewählt aus wenigstens einem inerten Gas, wenigsten einem Reaktivgas, Druckluft und einer Kombination davon. Das Hilfsgas kann auch als Schneidgas eingesetzt werden. Das Reservoir 122 ist mittels eines durch die Steuereinheit ansteuerbaren Ventils 124 fluidleitend mit dem Innenraum des Schneidkopfs 102 verbunden, wobei der Gasdruck eingestellt werden kann. Geschmolzenes Material des Werkstücks kann so aus der Prozesszone zusätzlich mittels des Hilfsgases ausgetrieben werden. Im vorliegenden Beispiel ist der Schalldruck ein Gasschalldruck. Eine beispielhaft in Fig. 6 schematisch gezeigte, z.B. sich zur Austrittsöffnung des Schneidkopfs verjüngende, Düse 106 kann in allen Beispielen in oder an dem Schneidkopf 102 vorgesehen sein. Die Vorrichtung 120 zum Einbringen eines Hilfsgases in die Prozesszone kann ebenfalls in allen Beispielen in oder an dem Schneidkopf 102 vorgesehen sein.

### Bezugszeichenliste

- 12: Werkstück
- 13: Prozesszone
- 100: Laserstrahlschneidvorrichtung
- 102: Schneidkopf
- 103: Laserquelle
- 104: Vorrichtung zum Erzeugen eines auf die Prozesszone ausgerichteten Schalldrucks
- 105: Laserschneidstrahl
- 105a: Strahlachse
- 106: Düse
- 107: Schallwelle
- 108: Steuereinheit
- 109: Verstelleinrichtung
- 110: Vorrichtung zur Kalibrierung der räumlichen Position des Druckknotens, Vorrichtung zur Messung des Ultraschalldrucks
- 112: Schallmesseinrichtung
- 120: Vorrichtung zum Einbringen eines Hilfsgases in die Prozesszone
- 122: Reservoir
- 124: Ventil
- M: Mittenachse
- T: Ultraschallerzeuger

## Patentansprüche

1. Laserstrahlschneidvorrichtung (100) für das Schneiden von metallischen Werkstücken, beinhaltend
- einen Schneidkopf (102) zum Richten eines Laserschneidstrahls (105) entlang einer Strahlachse (105a) auf eine Prozesszone (13) eines Werkstücks (12); und
- eine Vorrichtung (104) zum Erzeugen eines auf die Prozesszone (13) ausgerichteten Schalldrucks mittels Schallwellen (107);
**dadurch gekennzeichnet, dass**
die Vorrichtung (104) zum Erzeugen des auf die Prozesszone ausgerichteten Schalldrucks ein Array mehrerer Ultraschallerzeuger (T) aufweist und ausgebildet ist zum Erzeugen mindestens eines in seiner räumlichen Position bewegbaren Druckknotens des Schalldrucks mittels Einstellen wenigstens eines Parameters aus der Gruppe beinhaltend Frequenz, Phase und Signaltyp mindestens eines der Ultraschallerzeuger (T).

2. Laserstrahlschneidvorrichtung nach Anspruch 1,
wobei die Vorrichtung (104) zum Erzeugen des auf die Prozesszone ausgerichteten Schalldrucks ausgebildet ist, beim Erzeugen des mindestens einen in seiner räumlichen Position bewegbaren Druckknotens im Bereich der Prozesszone (13) mindestens eine konstruktive Interferenz der Schallwellen (107) einzustellen, die eine auf geschmolzenes Material (14) des Werkstücks (12) gerichtete Austriebskraft zum Austreiben des geschmolzenen Materials aus der Prozesszone erzeugt.

3. Lasterstrahlschneidvorrichtung nach einem der vorherigen Ansprüche,
wobei die Vorrichtung (104) zum Erzeugen eines auf die Prozesszone ausgerichteten Schalldrucks ausgebildet ist, die Position des mindestens einen bewegbaren Druckknotens und/oder eine Position der mindestens einen konstruktiven Interferenz zu oszillieren und/oder schneidrichtungsabhängig vorzugeben.

4. Lasterstrahlschneidvorrichtung nach einem der vorherigen Ansprüche,
wobei die Ultraschallerzeuger des Arrays mindestens eine Arrayfläche aufspannen, die zumindest teilweise um die Strahlachse (105a) herum angeordnet, eben und/oder gewölbt ist; und/oder
wobei zumindest einer der Ultraschallerzeuger des Arrays derart angeordnet ist, dass eine Mittenachse (M) eines von dem Ultraschallerzeuger ausgehenden Winkelbereichs der von ihm erzeugten Schallwelle parallel zu oder in einem Winkel zur Strahlachse (105a) ausgerichtet ist.

5. Laserstrahlschneidvorrichtung nach einem der vorherigen Ansprüche,
wobei eine Steuereinheit (108) zum Steuern des Arrays der Ultraschallerzeuger vorgesehen ist, wobei die Steuereinheit ausgebildet ist, mindestens einen der Ultraschallerzeuger des Arrays jeweils einzeln und/oder mehrere der Ultraschallerzeuger in mindestens einer definierten Gruppe anzusteuern.

6. Laserstrahlschneidvorrichtung nach einem der vorherigen Ansprüche,
wobei eine Vorrichtung (110) zur Kalibrierung der räumlichen Position des bewegbaren Druckknotens des Schalldrucks vorgesehen ist, die mindestens ein Element ausgewählt aus einem Kraftsensor, einem Ultraschallmikrophon und einer optischen Messeinrichtung aufweist.

7. Laserstrahlschneidvorrichtung nach einem der vorherigen Ansprüche, wobei eine Vorrichtung zum Einbringen eines Hilfsgases in die Prozesszone und zum zusätzlichen Austreiben von geschmolzenem Material des Werkstücks aus der Prozesszone mittels des Hilfsgases vorgesehen ist.

8. Verfahren zum Laserstrahlschneiden von metallischen Werkstücken, insbesondere mit einer Vorrichtung nach einem der vorstehenden Ansprüche, beinhaltend
- Richten eines Laserschneidstrahls entlang einer Strahlachse auf eine Prozesszone eines Werkstücks (S1); und
- Erzeugen eines auf die Prozesszone ausgerichteten Schalldrucks mittels Schallwellen (S2);
**dadurch gekennzeichnet, dass**
ein Array mehrerer Ultraschallerzeuger mindestens einen in seiner räumlichen Position bewegbaren Druckknoten des Schalldrucks erzeugt (S3),
wobei wenigstens ein Parameter aus der Gruppe beinhaltend Frequenz, Phase und Signaltyp mindestens eines der Ultraschallerzeuger eingestellt wird (S4).

9. Verfahren nach Anspruch 8,
wobei beim Erzeugen des mindestens einen in seiner räumlichen Position bewegbaren Druckknotens im Bereich der Prozesszone mindestens eine konstruktive Interferenz der Schallwellen eingestellt wird, die eine auf geschmolzenes Material des Werkstücks gerichtete Austriebskraft zum Austreiben des geschmolzenen Materials aus der Prozesszone erzeugt.

10. Verfahren nach einem der Ansprüche 8 und 9,
wobei die Position des mindestens einen bewegbaren Druckknotens und/oder eine Position der mindestens einen konstruktiven Interferenz oszilliert werden und/oder schneidrichtungs-abhängig vorgegeben werden.

11. Verfahren nach einem der Ansprüche 8 bis 10,
wobei das Array der Ultraschallerzeuger mindestens eine modulierte oder modulierbare Schallwelle erzeugt; und/oder
wobei die Position des bewegbaren Druckknotens durch Einstellen mindestens eines Parameters aus der Gruppe beinhaltend eine Frequenz und eine Phasenlage der mindestens einen Schallwelle bewegt wird.

12. Verfahren nach einem der Ansprüche 8 bis 11,
wobei eine Kalibrierung der räumlichen Position des bewegbaren Druckknotens des Schalldrucks mit mindestens einem Element ausgewählt aus einem Ultraschallmikrophon und einer optischen Messeinrichtung erfolgt.

13. Verfahren nach einem der Ansprüche 8 bis 12,
wobei ein Hilfsgas in die Prozesszone eingebracht und geschmolzenes Material des Werkstücks zusätzlich mittels des Hilfsgases aus der Prozesszone ausgetrieben wird.

14. Verfahren nach einem der Ansprüche 8 bis 13,
wobei das Hilfsgas ausgewählt ist oder wird aus wenigstens einem inerten Gas, wenigsten einem Reaktivgas, Druckluft und einer Kombination davon; und/oder wobei die Schallwellen über gasförmiges Medium in die Prozesszone des Werkstücks eingeleitet werden.

15. Computerprogrammprodukt, beinhaltend ein oder mehrere Programmmodule, die bewirken, dass die Laserstrahlschneidvorrichtung nach einem der Ansprüche 1 bis 7 Schritte des Verfahrens nach einem der Ansprüche 8 bis 14 ausführt, insbesondere wenn die Programmmodule in eine Speichereinheit oder eine Recheneinheit der Laserstrahlschneidvorrichtung geladen werden.
